# EUROPÄISCHE PATENTANMELDUNG

(11) **EP 2 650 549 A2**
(43) Veröffentlichungstag der Anmeldung: **16.10.2013**
(21) Anmeldenummer: 13158868.3
(22) Anmeldetag: 13.03.2013
(51) Int. Cl.: F15B 19/00, B62D 5/09

(54) **Elektrohydraulische Anordnung, Verfahren zur Steuerung der elektrohydraulischen Anordnung und mobile Arbeitsmaschine mit der elektrohydraulischen Anordnung**

(30) Priorität: 12.04.2012 DE 102012205939
(71) Anmelder: ROBERT BOSCH GMBH, 70442 Stuttgart (DE)
(72) Erfinder: Schmitz, David, 71638 Ludwigsburg (DE)
(74) Vertreter: Maiß, Harald

(57) **Zusammenfassung**

Offenbart ist eine elektrohydraulische Anordnung, insbesondere eine elektrohydraulische Lenkungsvorrichtung, die ein Stellglied (2), insbesondere in Form eines Lenkzylinders, aufweist. Zur Verstellung des Stellglieds (2) in eine erste Richtung ist ein erster Anschluss (A1) des Stellglieds über eine erste Zuleitung (20) mit einer Druckmittelversorgung (44), insbesondere in der Form einer Hydropumpe, verbindbar. Zur Verstellung des Stellglieds (2) in eine andere Richtung ist ein zweiter Anschluss (A2) des Stellglieds (2) über eine zweite Zuleitung (24) ebenfalls mit der Druckmittelversorgung verbindbar. Des Weiteren ist der erste Anschluss (A1) über eine erste Rückleitung (22) und der zweite Anschluss (A2) über eine zweite Rückleitung (26 mit einer Druckmittelsenke (38) verbindbar. In einer jeweiligen Zuleitung (20, 22) und einer jeweiligen Rückleitung (22, 26) ist eine Ventilgruppe mit jeweils einer Mehrzahl fluidisch parallel angeordneter Ventile (48-56) zum Steuern eines Druckmittelvolumenstroms angeordnet. Mit einem Sensor (74) wird ein Stellungsistwert, insbesondere eine Verstellposition, des Stellglieds (2) bestimmt und an eine Steuervorrichtung (68) gemeldet. Diese bildet aus dem Stellungsistwert und einem vorgegebenen Stellungssollwert eine Regeldifferenz. Anhand der Regeldifferenz wird ein effektiver freier Strömungsquerschnitt der Ventile (48-56) und somit das Stellglied (2) gesteuert.

## Beschreibung

Die Erfindung betrifft eine elektrohydraulische Anordnung gemäß dem Oberbegriff des Anspruchs 1, ein Verfahren zur Steuerung einer derartigen elektrohydraulischen Anordnung und eine mobile Arbeitsmaschine mit einer derartigen elektrohydraulischen Anordnung.

In dem Dokument EP 2 388 178 A2 ist eine elektrohydraulische Anordnung in Form einer elektrohydraulischen Lenkung offenbart. Diese hat einen als Gleichgangzylinder ausgebildeten Lenkzylinder mit einem Kolben, der zwei Zylinderkammern voneinander trennt. Eine jeweilige Zylinderkammer ist mit einer Zuleitung verbunden in denen jeweils fluidisch parallel ein erstes und ein zweites Ventil angeordnet ist. Über die Ventile der Zuleitungen ist eine Druckmittelversorgung der Zylinderkammern steuerbar, womit jede Zylinderkammer mit Druckmittel versorgt werden kann. Des Weiteren ist jede Zylinderkammer mit einer Rückleitung verbunden, wobei in einer jeweiligen Rückleitung ebenfalls zwei Ventile fluidisch parallel angeordnet sind, über die eine Verbindung zu einem Tank auf- und zusteuerbar ist. Fällt ein Ventil aus, beispielsweise indem ein Ventilschieber eines Ventils in einer unbetätigten Stellung verklemmt, so wird dessen Funktion einfach durch das fluidisch parallel angeordnete Ventil übernommen.

In der Druckschrift WO 2007/028863 A1 ist eine weitere elektrohydraulische Anordnung offenbart. Diese hat einen Hydrozylinder in Form eines Differentialzylinders mit einer einseitigen Kolbenstange, wobei ein mit der Kolbenstange verbundener Kolben zwei Zylinderkammern voneinander trennt. Ein Anschluss einer jeweiligen Zylinderkammer ist über eine jeweilige Zuleitung mit einer Druckmittelquelle verbunden. In einer jeweiligen Zuleitung sind hierbei Schaltventile fluidisch parallel angeordnet. Des Weiteren ist der Anschluss einer jeweiligen Zylinderkammer über eine Rückleitung mit einem Tank verbunden. In einer jeweiligen Rückleitung sind dabei ebenfalls Schaltventile fluidisch parallel angeordnet. Ventilschieber der Ventile der Zu- und Rückleitungen sind mit einer Feder in Richtung einer Schließstellung mit einer Federkraft beaufschlagt und sind über einen elektrischen Aktuator in eine Öffnungsstellung bringbar. Zur Erkennung, ob alle Ventile funktionsfähig sind, wird ein Selbsttest der Anordnung vorgenommen, der nicht während eines normalen Betriebs der Anordnung aktiv ist. Fällt ein Ventil aus, so wird dies vom System bei dem Selbsttest aufgrund von Druckänderungen erkannt, indem ein Druck an mehreren Stellen der elektrohydraulischen Anordnung abgegriffen wird und mit zuvor berechneten Größen verglichen wird. Nach der Fehlererkennung wird das ausgefallene Ventil durch eine neue Ansteuerung der übrigen Ventile ausgeglichen.

Diese Lösung hat den Nachteil, dass die elektrohydraulische Anordnung vorrichtungstechnisch aufwändig mit mehreren Drucksensoren zur Fehlererkennung ausgestaltet ist. Des weiteren ist bei einem Ausfall eines Ventils eine neue Ansteuerung der übrigen Ventile regelungs- und steuerungstechnisch vergleichsweise aufwändig.

Demgegenüber liegt der Erfindung die Aufgabe zugrunde, eine elektrohydraulische Anordnung zu schaffen, die vorrichtungstechnisch einfach ausgestaltet ist und eine hohe Sicherheit aufweist. Des Weiteren liegt der Erfindung die Aufgabe zugrunde, ein Verfahren zur Steuerung der elektrohydraulischen Anordnung zu schaffen, das zu einem sicheren Einsatz einer elektrohydraulischen Anordnung führt und mit geringem Aufwand ausführbar ist. Ferner liegt der Erfindung die Aufgabe zugrunde, eine mobile Arbeitsmaschine mit der elektrohydraulischen Anordnung zu schaffen, die mit geringem vorrichtungstechnischem Aufwand sicher einsetzbar ist.

Die Aufgabe hinsichtlich der elektrohydraulischen Anordnung wird gelöst gemäß den Merkmalen des Anspruchs 1, hinsichtlich des Verfahrens gemäß den Merkmalen des Anspruchs 14 und hinsichtlich der mobilen Arbeitsmaschine gemäß den Merkmalen des Anspruchs 15.

Erfindungsgemäß hat eine elektrohydraulische Anordnung, insbesondere eine elektrohydraulische Lenkungsvorrichtung, eine Druckmittelversorgung, bei der es sich beispielsweise um eine Hydropumpe handeln kann. Über eine erste Zuleitung ist ein erster Anschluss eines Stellglieds zur Verstellung des Stellglieds in eine erste Richtung mit der Druckmittelversorgung verbindbar. Ein zweiter Anschluss des Stellglieds zur Verstellung des Stellglieds in eine zweite Richtung ist über eine zweite Zuleitung mit der Druckmittelversorgung verbindbar. Des Weiteren ist der erste Anschluss über eine erste Rückleitung und der zweite Anschluss über eine zweite Rückleitung mit einer Druckmittelsenke, insbesondere mit einem Tank, verbindbar. In einer jeweiligen Zuleitung und einer jeweiligen Rückleitung ist eine Ventilgruppe mit jeweils mehreren fluidisch parallel angeordnete Ventilen zum Steuern eines Druckmittelvolumenstroms vorgesehen. Eine Ventilgruppe weist hierbei vorzugsweise jeweils zwei Ventile auf. Über einen Sensor wird ein Stellungsistwert des Stellglieds erfasst. Bei dem Stellungsistwert handelt es sich beispielsweise um eine Verstellposition des Stellglieds. Mit einer Steuervorrichtung wird aus dem Stellungsistwert und einem vorgegebenen Stellungssollwert eine Regeldifferenz gebildet. In Abhängigkeit der Regeldifferenz steuert die Steuervorrichtung einen effektiven freien Strömungsquerschnitt der Ventile. Die Steuervorrichtung kann hierbei beispielsweise einfach als P-Regler die Ventile regeln.

Diese Lösung hat den Vorteil, dass es nicht notwendig ist, einen Ausfall eines Ventils unmittelbar zu erfassen, um die übrigen Ventile dann entsprechend anders anzusteuern. Soll bei der erfindungsgemäßen Anordnung das Stellglied verstellt werden, so wird ein Anschluss über eine Zuleitung mit der Druckmittelversorgung und der andere Anschluss über eine Rückleitung mit der Druckmittelsenke verbunden. Die Ventile in der aktiven Zu- und Rückleitung sind dabei in einer gewissen Öffnungsstellung, da bei einer gewünschten Verstellung des Stellglieds eine Regeldifferenz zwischen dem Stellungsistwert und dem Stellungssollwert vorliegt. Ist hierbei ein Ventil in der Zuleitung defekt, indem sein Ventilschieber in einer Schließstellung verbleibt, so führt dies dazu, dass das Stellglied zum Verstellen mit weniger Druckmittel versorgt ist. Dies wiederum hat zur Folge, dass sich der Stellungsistwert vergleichsweise langsam ändert und die Regeldifferenz vergleichsweise hoch ist. Die übrigen nicht fehlerhaften und geöffneten Ventile werden somit durch die Steuervorrichtung stärker geöffnet.

Verbleibt ein Ventilschieber eines Ventils in der Zuleitung fehlerhaft in seiner Öffnungsstellung, so führt dies dazu, dass das Stellglied mit zuviel Druckmittel versorgt wird, wodurch sich der Stellungsistwert vergleichsweise schnell ändert. Die Regeldifferenz wird hierdurch vergleichsweise schnell kleiner, wodurch der effektive freie Strömungsquerschnitt der normal funktionierenden Ventile entsprechend verkleinert wird.

Fällt ein Ventil in der aktiven Rückleitung aus, indem sein Ventilschieber in seiner Schließstellung verbleibt, so führt dies dazu, dass die übrigen Ventile einfach stärker geöffnet werden.

Verbleibt ein Ventilschieber eines Ventils in der aktiven Rückleitung in seiner Öffnungsstellung, so führt dies wiederum dazu, dass die übrigen Ventile aufgrund der sich schneller ändernden Regeldifferenz schneller in Richtung ihres sich verkleinernden effektiven freien Strömungsquerschnitts betätigt werden. Denkbar wäre hierbei, dass das Stellglied in die gewünschte Stellposition verfahren wird und durch das fehlerhaft geöffnete Ventil in der Rückleitung von der gewünschten Stellposition aus weiter verfahren wird. Dies wiederum würde dazu führen, dass die Regeldifferenz das Vorzeichen wechselt, wodurch dann der Anschluss, der über das fehlerhafte Ventil in der Rückleitung mit der Druckmittelsenke verbunden ist, zusätzlich über die Zuleitung mit der Druckmittelversorgung verbunden wird, während der andere Anschluss dann über die andere Rückleitung ebenfalls mit der Druckmittelsenke verbunden wird.

Zusammenfassend lässt sich feststellen, dass bei einem defekten Ventil die übrigen Ventile automatisch von der Steuervorrichtung entsprechend der Regeldifferenz angesteuert werden und eine sichere Verstellung des Stellglieds mit geringem vorrichtungstechnischen und geringem regelungstechnischen Aufwand erreicht ist. Je nach Art des Fehlers führt diese automatische Kompensierung von Ventilfehlern zu einer Verschlechterung der Regelgüte und der maximalen Verstellgeschwindigkeit verglichen mit dem fehlerfreien System. In der Regel ist die verbleibende Regelgüte jedoch ausreichend um den hydraulischen Verbraucher bezwiehungsweise das Stellglied übergangsweise weiterzubetreiben, bis ein sicherer Zustand erreicht ist.

Vorzugsweise wird der effektive freie Strömungsquerschnitt der Ventile einer jeweiligen Ventilgruppe in Abhängigkeit von der Größe der Regeldifferenz verändert. Beispielsweise ist die Abhängigkeit derart, dass je größer die Regeldifferenz ist, desto größer ist dann der effektive freie Strömungsquerschnitt der von der Steuervorrichtung angesteuerten Ventile. Die Abhängigkeit kann beispielsweise einfach linear sein.

Die Ventile einer Ventilgruppe können hinsichtlich ihres effektiven freien Strömungsquerschnitts gleich oder in einem festen Verhältnis zueinander angesteuert werden. Hierdurch ist der Steuerungsaufwand für die Steuervorrichtung äußerst gering. Die Ventile einer Ventilgruppe werden somit derart angesteuert, dass diese einen gleichen effektiven freien Strömungsquerschnitt oder ein festes Verhältnis zueinander hinsichtlich ihres effektiven freien Strömungsquerschnitts aufweisen.

Besonders vorteilhaft ist es, wenn das Stellglied ein Lenkzylinder, insbesondere ein Gleichgangzylinder, ist, der einen zwei Steuerkammern voneinander trennenden Kolben aufweist, wobei die Steuerkammern mit einem jeweiligen Anschluss verbunden sind. Da für einen Lenkzylinder, der insbesondere für mobile Arbeitsmaschinen eingesetzt werden kann, hohe Sicherheitsanforderungen hinsichtlich Lenkbarkeit im Fehlerfall bestehen, können diese mit geringen vorrichtungstechnischen Aufwand durch die erfindungsgemäße elektrohydraulische Anordnung eingehalten werden. Ein Ausfall eines Ventils in der Form, dass der Ventilschiebers eines Ventils in seiner Schließstellung verbleibt, führt im schlimmsten Fall dazu, dass eine maximale Lenkgeschwindigkeit des Lenkzylinders nicht mehr erreicht wird. Die maximale Lenkgeschwindigkeit wird jedoch bei der mobilen Arbeitsmaschine hauptsächlich beim Wenden, im Stand oder bei langsamen Fahrgeschwindigkeiten benötigt.

Bei dem Sensor handelt es sich vorzugsweise um einen Wegaufnehmer, der einen Verschiebeweg des Kolbens des Lenkzylinders als Stellungsistwert misst.

Mit Vorteil unterscheidet sich ein effektiver freier Strömungsquerschnitt der Ventile der Ventilgruppe in der ersten Zuleitung zu den Ventilen der Ventilgruppe in der zweiten Rückleitung und/oder der Ventile der Ventilgruppe in der zweiten Zuleitung zu den Ventilen der Ventilgruppe in der ersten Rückleitung. Damit kann auf einfache Weise ein Druck in den Anschlüssen des Stellglieds beziehungsweise in den Steuerkammern des Lenkzylinders eingestellt werden. Ist beispielsweise der effektive freie Strömungsquerschnitt der Ventile in den Rückleitungen kleiner als der Ventile in den Zuleitungen, so führt dies dazu, dass ein Druck in den Anschlüssen des Stellglieds beziehungsweise in den Steuerkammern des Lenkzylinders größer wird, und somit beispielsweise der Kolben des Lenkzylinders mit höheren Druckkräften beaufschlagt ist und damit höhere Haltekräfte aufweist, um beispielsweise gegenüber äußeren Krafteinwirkungen robuster zu sein.

Bevorzugterweise ist der maximale effektive freie Strömungsquerschnitt der Ventile der Ventilgruppe in der ersten Zuleitung größer als der der Ventile der Ventilgruppe in der zweiten Rückleitung und/oder der Ventile der Ventilgruppe in der zweiten Zuleitung größer als der der Ventile der Ventilgruppe in der ersten Rückleitung. Ein Vorteil bei kleineren maximalen effektiven freien Strömungsquerschnitten der Ventile in den Rückleitungen gegenüber den Ventilen in den Zuleitungen ist, dass die Fehlertoleranz bei einem Ausfall eines Ventils verbessert ist. Fällt beispielsweise ein Ventil in der Rückleitung aus, indem sein Ventilschieber in der Öffnungsstellung verbleibt, so strömt weniger Druckmittel durch dieses Ventil, wenn sein maximaler effektiver freier Strömungsquerschnitt kleiner ist. Fällt ein Ventil in der Zuleitung aus, indem sein Ventilschieber in der Öffnungsstellung verbleibt, so erfolgt eine Verstellung des Stellglieds beziehungsweise eine Verschiebung des Kolbens des Lenkzylinders durch die einen kleineren effektiven freien Strömungsquerschnitt aufweisenden Ventile der Rückleitung in einer vergleichsweise sicheren Geschwindigkeit.

Vorzugsweise kann der maximale effektive freie Strömungsquerschnitt jedes Ventils der Ventilgruppe in der ersten Rückleitung um einen festen Faktor kleiner als der größte effektive freie Strömungsquerschnitt jedes Ventils der Ventilgruppe in der zweiten Zuleitung sein und/oder es kann der maximale effektive freie Strömungsquerschnitt jedes Ventils der Ventilgruppe in der zweiten Rückleitung um einen festen Faktor kleiner als der größte effektive freie Strömungsquerschnitt jedes Ventils der Ventilgruppe in der ersten Zuleitung sein.

In weiterer Ausgestaltung der Erfindung ist der Faktor konstruktiv oder durch unterschiedliche Ansteuerung der Ventile durch die Steuervorrichtung geschaffen. Konstruktiv kann der Faktor durch den Einsatz von unterschiedlichen Ventilen ausbildbar sein, indem in den Rückleitungen kleinere Ventile als in den Zuleitungen eingesetzt sind. Denkbar wäre auch zusätzlich zu den kleineren Ventilen oder alternativ, bei gleich großen Ventilen, den effektiven freien Strömungsquerschnitt durch Blenden mit einem festen Querschnitt zu verkleinern. Der Faktor kann steuerungtechnisch umgesetzt sein, indem die Steuervorrichtung die Ventile der Zu- und Rückleitungen unterschiedlich weit öffnet.

Die Ventile zumindest einer oder aller Ventilgruppen können als Proportionalventile ausgestaltet sein. Hierdurch kann die Steuervorrichtung die als Proportionalventile ausgebildeten Ventile jeweils mit einem Stromsignal ansteuern, das in Abhängigkeit der Regeldifferenz veränderlich ist. Die Größe des Stromsignals ist dann vorzugsweise etwa proportional zum freien Strömungsquerschnitt der angesteuerten Ventile. Das heißt je größer das Stromsignal, desto größer ist der effektive freie Strömungsquerschnitt. Des Weiteren kann die Größe des Stromsignals etwa proportional zur Regeldifferenz sein, wobei dann mit der Größe der Regeldifferenz die Größe des Stromsignals steigt.

Alternativ ist denkbar, die Ventil zumindest einer Ventilgruppe oder aller Ventilgruppen als Schaltventile auszubilden. Die Schaltventile können dann von der Steuervorrichtung mit einem pulsbreitenmodulierten Stromsignal angesteuert werden. Der effektive freie Strömungsquerschnitt der als Schaltventile ausgebildeten Ventile kann dann etwa proportional zur Regeldifferenz sein.

In weiterer Ausgestaltung der Erfindung sind die Ventile als Sitzventile ausgebildet. Sitzventile weisen eine äußerst geringe Leckage auf, wodurch bei einem Einsatz des Stellglieds als Lenkzylinder dieser im Wesentlichen leckagefrei eingespannt werden kann. Des Weiteren haben die Sitzventile eine vergleichsweise geringe Wahrscheinlichkeit, dass ihr Stößel beziehungsweise Schieber in einer geöffneten Stellung verklemmt, wodurch sie robuster und sicherer sind.

Mit Vorteil sind die Ventile der Ventilgruppe in der ersten Zuleitung und die Ventile der Ventilgruppe in der zweiten Rückleitung und/oder die Ventile der Ventilgruppe in der zweiten Zuleitung und die Ventile der Ventilgruppe in der ersten Rückleitung identisch ausgebildet und in einer gleichen Anzahl vorgesehen, was zu einem äußerst geringem vorrichtungstechnischen Aufwand der elektrohydraulischen Anordnung führt.

Bei einem erfindungsgemäßen Verfahren zur Steuerung eines erfindungsgemäßen elektrohydraulischen Anordnung wird der effektive freie Strömungsquerschnitt der Ventile einer jeweiligen Ventilgruppe von der Steuervorrichtung in Abhängigkeit der Regeldifferenz zwischen dem Stellungsistwert und dem vorgegebenen Stellungssollwert gesteuert.

Erfindungsgemäß hat eine mobile Arbeitsmaschine wenigstens ein lenkbares Rad. Dieses ist vorteilhafterweise mit der erfindungsgemäßen elektrohydraulischen Anordnung gekoppelt, wodurch die Arbeitsmaschine äußerst sicher mit geringen vorrichtungstechnischen Aufwand eingesetzt werden kann.

Sonstige vorteilhafte Weiterbildungen der Erfindung sind Gegenstand weiterer Unteransprüche.

Im Folgenden werden bevorzugte Ausführungsformen der Erfindung anhand schematischer Zeichnungen näher erläutert. Es zeigen:
Figur 1 einen elektrohydraulischen Schaltplan einer erfindungsgemäßen hydraulischen Anordnung;
Figur 2 ein Blockschaltbild einer Regelung der erfindungsgemäßen elektrohydraulischen Anordnung;
Figur 3 einen elektrohydraulischen Schaltplan der elektrohydraulischen Anordnung gemäß einer zweiten Ausführungsform; und
Figur 4 einen elektrohydraulischen Schaltplan im Bereich einer Hydropumpe der elektrohydraulischen Anordnung.

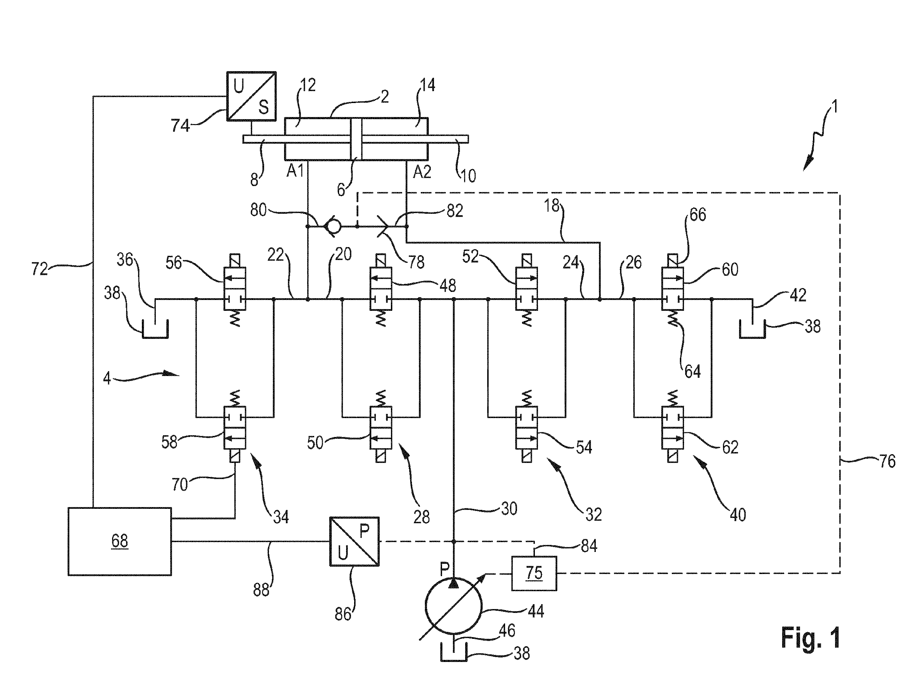

Gemäß Figur 1 ist eine elektrohydraulische Anordnung in Form einer elektrohydraulischen Lenkungsvorrichtung 1 dargestellt. Diese hat ein Stellglied in Form eines als Gleichgangzylinder ausgebildeten Lenkzylinders 2, der über eine Ventilanordnung 4 gesteuert ist.

Der Lenkzylinder 2 hat einen Kolben 6 von dem beidseitig eine Kolbenstange 8 und 10 weg kragt. Der Kolben 6 begrenzt zusammen mit der Kolbenstange 8 beziehungsweise 10 zwei ringförmige Steuerkammern 12 beziehungsweise 14. Die in der Figur 1 linke Steuerkammer 12 ist über einen ersten Anschluss A1 mit einer Anschlussleitung 16 und die rechte Steuerkammer 14 über einen zweiten Anschluss A2 mit einer Anschlussleitung 18 verbunden. Die erste Anschlussleitung 16 verzweigt sich in eine erste Zuleitung 20 und eine erste Rückleitung 22. Die zweite Anschlussleitung 18 verzweigt sich in eine zweite Zuleitung 24 und eine zweite Rückleitung 26. Die erste Zuleitung 20 ist über eine erste Ventilgruppe 28 mit einer Pumpenleitung 30 verbunden. Die zweite Zuleitung 24 ist über eine zweite Ventilgruppe 32 ebenfalls mit der Pumpenleitung 30 verbunden. Die erste Rückleitung 22 ist über eine dritte Ventilgruppe 34 mit einer Tankleitung 36 verbunden, die mit einem Tank 38 in Druckmittelverbindung steht. Die zweite Rückleitung 26 ist über eine vierte Ventilgruppe 40 ebenfalls mit einer Tankleitung 42 verbunden, die an den Tank 38 angeschlossen ist. Die Pumpenleitung 30 ist an einem Pumpenanschluss P einer verstellbaren Hydropumpe 44 angeschlossen, über die Druckmittel von dem Tank 38, einer Tankleitung 46 und einen Tankanschluss T der Hydropumpe 44 in die Pumpenleitung 30 förderbar ist.

Die Ventilgruppen 28, 32, 34, 40 weisen jeweils zwei fluidisch parallel angeordnete Ventile 48, 50; 52, 54; 56, 58 beziehungsweise 60, 62 auf. Die als Schaltventile ausgebildeten Ventile 48 bis 62 sind 2/2-Wegeventile deren Ventilschieber über eine Ventilfeder 64 (siehe beispielsweise Ventil 60) in eine Schließstellung mit einer Federkraft beaufschlagt ist und über einen elektrischen Aktuator 66 in eine Öffnungsstellung bringbar ist. Denkbar wäre auch zusätzliche zu einer jeweiligen Ventilfeder der Ventile 48 bis 62 eine weitere redundante Ventilfeder vorzusehen, damit beim Ausfall einer Ventilfeder eine weitere Ventilfeder vorhanden ist, um den Ventilschieber in Richtung seiner Schließstellung mit einer Federkraft zu beaufschlagen. Die Ventile 48 bis 62 sind als Sitzventile ausgestaltet. Über eine Steuervorrichtung 68, insbesondere einer Electronic Control Unit (ECU), sind die Ventile 48 bis 62 jeweils mit einem pulsbreitenmodulierten Stromsignal ansteuerbar. Die Steuervorrichtung 68 kann ein P-Regler sein. Der effektive freie Strömungsquerschnitt der Ventile 48 bis 62 ist bei dieser gepulsten Ansteuerung der zeitlich gemittelte Strömungsquerschnitt dieser Ventile. Die Steuervorrichtung 68 ist über eine jeweilige elektrische Steuerleitung 70 mit einem jeweiligen elektrischen Aktuator 66 der Ventile 48 bis 62 verbunden, wobei der besseren Darstellbarkeit halber lediglich eine Steuerleitung 70 in der Figur 1 zwischen der Steuervorrichtung 68 und dem Ventil 58 eingezeichnet ist. Der besseren Darstellbarkeit halber ist auch nur ein elektrischer Aktuator 66 mit einem Bezugszeichen versehen.

Die Steuervorrichtung 68 ist über eine Signalleitung 72 mit einem Sensor in Form eines Wegaufnehmers 74 verbunden. Dieser misst einen Verschiebeweg des Kolbens 6 über seine in der Figur 1 linke Kolbenstange 8 und meldet diesen als Stellungsistwert x_ist an die Steuervorrichtung 68. Ist der Kolben 6 mittig in seiner Neutralstellung, so ist der Stellungsistwert x_ist Null. Wird der Kolben 6 in der Figur 1 nach rechts verschoben, dass heißt Druckmittel strömt in die Steuerkammer 12 ein und aus der Steuerkammer 14 aus, so ist der Stellungsistwert x_ist größer Null und steigt im Wesentlichen linear zum Verschiebeweg. Wird der Kolben 6 von seiner Neutralstellung in der Figur 1 aus nach links verschoben, dass heißt Druckmittel strömt in die Steuerkammer 14 ein und aus der Steuerkammer 12 aus, so ist der Stellungsistwert x_ist kleiner Null und sinkt im Wesentlichen linear mit dem Verschiebeweg des Kolbens 6. Der Stellungsistwert x_ist wird in der Steuervorrichtung 8 mit einem vorgegebenen Stellungssollwert x_soll verglichen und daraus eine Regeldifferenz aus Stellungsistwert x_ist und dem Stellungssollwert x_soll gebildet, um daraus entsprechend dem Regelgesetz eine Stellgröße u zur Steuerung der Ventile 48 bis 62 zu berechnen, wobei die Stellgröße u einem bestimmten Puls-Pausen-Verhältnis bei der pulsweitenmodulierten Ansteuerung entspricht. Der Stellungssollwert x_soll wird beispielsweise von einem Bediener der elektrohydraulischen Lenkungsvorrichtung 1 durch Verschwenken eines Lenkrads oder eines Steuerhebels vorgegeben. Zur Regelung der freien effektiven Strömungsquerschnitte der Ventile 48 bis 62 wird die Steuervorrichtung 68 beispielsweise einfach als P-Regler eingesetzt.

Die verstellbare Hydropumpe 44 wird auf herkömmliche Weise über einen Druckregler 75 eingestellt, an den über eine Load-Sensing (LS)-Leitung 76 der höchste Lastdruck der Steuerkammern 12 beziehungsweise 14 gemeldet wird. Die LS-Leitung 76 ist hierzu mit einem Ausgang eines Wechselventils 78 verbunden, dessen erster Eingangsanschluss 80 mit der in der Figur 1 linken Anschlussleitung 16 und dessen zweiter Eingangsanschluss 82 mit der rechten Anschlussleitung 18 verbunden ist. Des Weiteren ist der Druckregler 75 mit einer Druckmeldeleitung 84 verbunden, die den Druck von der Pumpenleitung 30 abgreift. Über einen Drucksensor 86 wird ebenfalls der Druck von der Pumpenleitung 30 abgegriffen und über eine Signalleitung 88 der Steuervorrichtung 68 gemeldet.

Der Lenkzylinder 2 ist mit zumindest einem lenkbaren Rad einer mobilen Arbeitsmaschine gekoppelt, wodurch das Rad bei einer Auslenkung des Kolbens 6 gelenkt wird.

Soll der Kolben 6 des Lenkzylinders 2 in der Figur 1 nach rechts verschoben werden, so wird der Steuervorrichtung 68 über in der Figur 1 nicht dargestellte Mittel der Stellungssollwert x_soll vorgegeben, der größer Null ist. Über den Wegaufnehmer 74 wird kontinuierlich der Stellungsistwert x_ist gemessen und eine Regeldifferenz gebildet. Diese ist dabei so lange größer Null, solange sich der Stellungsistwert x_ist vom Stellungssollwert x_soll unterscheidet. Ist die aus der Regeldifferenz gebildete Stellgröße u größer Null, so werden die Ventile 48 und 50 der ersten Ventilgruppe 28 und die Ventile 60 und 62 der vierten Ventilgruppe 40 geöffnet, womit Druckmittel von der Hydropumpe 44 in die linke Steuerkammer 12 und aus der rechten Steuerkammer 14 zum Tank 38 strömt. Ein effektiver freier Strömungsquerschnitt der aufgesteuerten Ventile 48, 50, 60 und 62 ist dabei im Wesentlichen proportional zur Größe der Stellgröße u. Das heißt je größer die Stellgröße u, also je größer die Regeldifferenz, desto größer ist auch der effektive freie Strömungsquerschnitt. Ist die Stellgröße u Null, dass heißt, der Stellungssollwert x_soll entspricht dem Stellungsistwert x_ist, so sind die Ventile 48, 50, 60 und 62 wieder geschlossen.

Soll der Kolben 6 des Lenkzylinders 2 in die entgegen gesetzte Richtung verschoben werden, dann ist eine Regeldifferenz kleiner Null, wodurch die Ventile 52, 54 der zweiten Ventilgruppe und die Ventile 56 und 58 der dritten Ventilgruppe geöffnet sind. Hierdurch kann Druckmittel von der Pumpe 44 in die in der Figur 1 rechte Steuerkammer 14 und aus der linken Steuerkammer 12 zum Tank 38 strömen. Auch hierbei gilt, dass ein effektiver freier Strömungsquerschnitt der Ventile 48, 50, 56 und 58 im Wesentlichen proportional zur Stellgröße u ist.

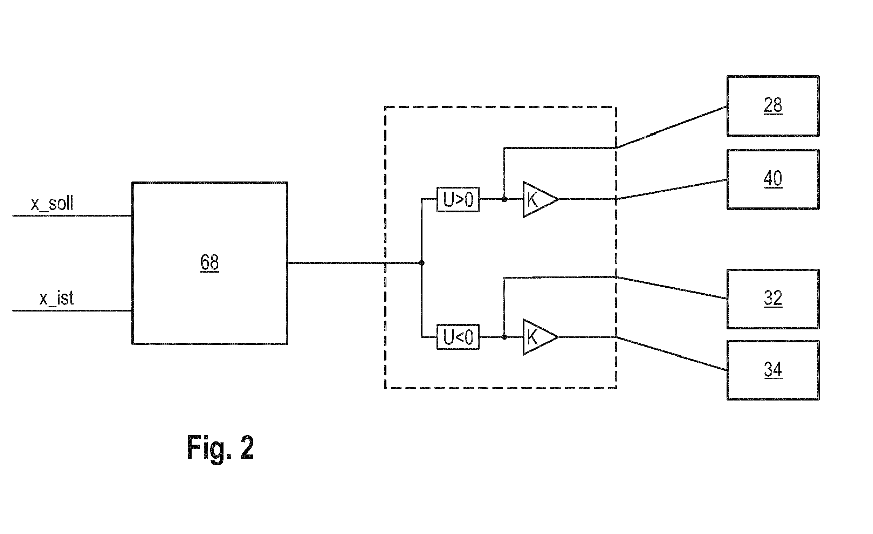

In der Figur 2 ist die Regelung der elektrohydraulischen Lenkungsvorrichtung 1 aus Figur 1 schematisch in einem Blockschaltbild dargestellt. Die Steuervorrichtung 68 hat als Eingangsgröße, wie vorstehend in Figur 1 erläutert, einen Stellungsistwert x_ist und einen Stellungssollwert x_soll. Daraus wird die Regeldifferenz gebildet und entsprechend des Reglergesetzes eine Stellgröße u gebildet. Ist die Stellgröße u größer Null, so werden die erste Ventilgruppe 28 und die vierte Ventilgruppe 40 angesteuert und deren Ventile 48, 50 beziehungsweise 60, 62 geöffnet, wodurch der Kolben 6 des Lenkzylinders 2 aus Figur 1 nach rechts verschoben wird. Die zweite und dritte Ventilgruppe 32 und 34 sind hierbei nicht angesteuert, wodurch deren Ventile 52, 54 und 56, 58 geschlossen sind. Ist die Stellgröße u kleiner Null, so sind die zweite Ventilgruppe 32 und die dritte Ventilgruppe 34 angesteuert, wodurch deren Ventile 52, 54 und 56, 58 geöffnet sind. Der Kolben 6 wird hierdurch nach links bewegt. Die erste und vierte Ventilgruppe 28, 40 sind hierbei nicht angesteuert, wodurch deren Ventile 48, 50 beziehungsweise 60, 62 geschlossen sind.

Der effektive freie Strömungsquerschnitt der Ventile 60 und 62 der vierten Ventilgruppe 40 und der Ventile 56 und 58 der dritten Ventilgruppe 34, die jeweils eine Verbindung zum Tank 38 aufsteuern, ist um einen Faktor K kleiner als der effektive freie Strömungsquerschnitt der übrigen Ventile 48, 50, 52 und 54 der ersten Ventilgruppe 28 und der zweiten Ventilgruppe 32. Dies ist in der Figur 2 durch den dreiecksförmigen Block verdeutlicht. Der Faktor K kann hierbei beispielsweise derart gewählt sein, dass der effektive freie Strömungsquerschnitt der Ventile 56, 58, 60 und 62 etwa 70 Prozent des effektiven freien Strömungsquerschnitts der übrigen Ventile 48 bis 54 beträgt. Erreicht wird dies dadurch, dass die Ventile 56 bis 62 kleiner sind, diese eine zusätzliche Blende mit einem festen Querschnitt aufweisen oder unterschiedlich von der Steuervorrichtung 68 angesteuert werden. Sind Blenden vorgesehen, so ist denkbar alle Ventile 48 bis 62 gleich auszugestalten. Durch den geringeren effektiven freien Strömungsquerschnitt der Ventile 56 bis 62 herrscht im Rücklauf, also in der Steuerkammer 12 oder 14, die mit dem Tank 38 verbunden ist, ein höherer Gegendruck. Dies führt dazu, dass der Kolben 6 mit höheren Druckkräften beaufschlagt ist und somit eine hohe Stabilität gegenüber äußeren Krafteinflüssen, die beispielsweise durch das zumindest eine lenkbare Rad der mobilen Arbeitsmaschine auf diesen übertragen werden, hat.

Im Folgenden wird die Funktionsweise der elektrohydraulischen Lenkungsvorrichtung 1 beschrieben, wenn ein Defekt an einem der Ventile 48 bis 62 auftritt.

Fällt eines der Ventile 48 bis 54 im Zulauf aus, beispielsweise das Ventil 48, in dem es geschlossen bleibt, beispielsweise wenn sein Ventilschieber in der Schließstellung klemmt, so führt dies dazu, dass die Regeldifferenz vergleichsweise groß ist. Das fluidisch parallele Ventil 50 und die in der Rückleitung 22 angeordneten Ventile 56 und 58 werden hierdurch von der Steuervorrichtung 68 stärker geöffnet, wodurch wiederum eine vergleichsweise große Menge Druckmittell in die Steuerkammer 12 einströmen und aus der Steuerkammer 14 ausströmen kann. Bleibt dagegen das Ventil 48 mit seinem Ventilschieber in einer Öffnungsstellung, so führt dies dazu, dass die Steuerkammer 12 mit vergleichsweise viel Druckmittel versorgt wird. Die Regeldifferenz wird hierdurch ebenfalls vergleichsweise schnell geringer, wodurch der effektive freie Strömungsquerschnitt der übrigen Ventile 50, 60 und 62 durch die Steuervorrichtung 68 vergleichsweise schnell verkleinert wird.

Ist anstelle des Ventils 48 in der ersten Zuleitung 20 das Ventil 60 in der zweiten Rückleitung 26 defekt, in dem dessen Ventilschieber in einer Schließstellung verbleibt, bewirkt die Regelung, dass die übrigen Ventile 48, 50 und 62 weiter geöffnet werden.

Ist das defekte Ventil 60 dagegen in seiner Öffnungsstellung, so werden die übrigen Ventile 48, 50 und 62 stärker geschlossen. Hierbei ist denkbar, dass ein Gegendruck in der Steuerkammer 14 nicht mehr ausreichend ist, um auf den Kolben wirkenden Lenkkräften entgegenzuwirken. Dies wiederum hat zur Folge, dass sich der Kolben 6 zu schnell bewegen würde. Eine zu schnelle Bewegung führt zu einer Vorzeichenumkehr der Regeldifferenz und damit zu einer Verbindung der Hydropumpe mit der Steuerkammer 14, in dem die Ventile 52 und 54 der zweiten Ventilgruppe 32 geöffnet werden, während die Steuerkammer 12 über die Ventile 56 und 58 der dritten Ventilgruppe 34 zum Tank 38 entlastet wird. Die anderen Ventile 48, 50 und 62 werden entsprechend zugesteuert mit Ausnahme des defekten Ventils 60. Der Kolben 6 kann hierdurch effektiv gestoppt werden, wodurch eine gefährliche Lenkbewegung verhindert ist.

Bei einem Defekt der anderen Ventile 50, 52, 54, 56, 58 und 62 erfolgt die Regelung entsprechend. Durch die erfindungsgemäße elektrohydraulische Lenkungsvorrichtung 1 ist somit auf einfach Weise eine äußerst sichere Lenkung für eine mobile Arbeitsmaschine ermöglicht, ohne dass ein defektes beziehungsweise fehlerhaftes Ventil unmittelbar ermittelt werden muss. Nichtsdestotrotz ist eine Fehlerkerkennung in periodischen Abständen notwendig, damit eine Anhäufung von Fehlern nicht zu einem gefahrbringenden Zustand führen kann.

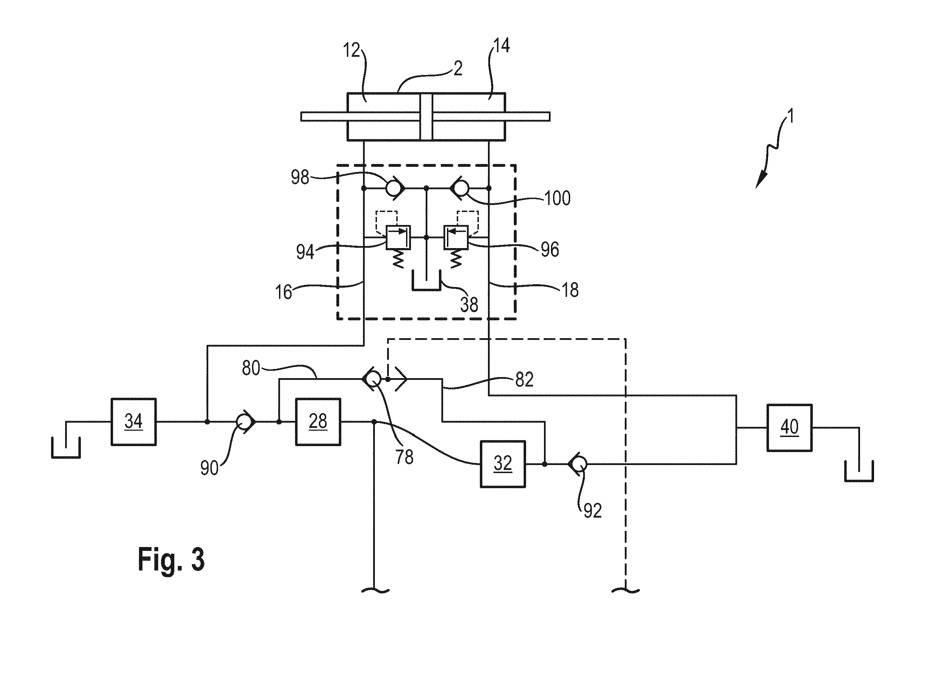

Gemäß Figur 3 ist eine zweite Ausführungsform der elektrohydraulischen Lenkungsvorrichtung 1 dargestellt. Die Ventilgruppen 28, 32, 34 und 40 sind hierbei als Blöcke abgebildet. Stromabwärts der ersten Ventilgruppe 28 ist ein sich in einer Druckmittelströmungsrichtung hin zur Steuerkammer 12 des Lenkzylinder 2 öffnendes Rückschlagventil 90 angeordnet. Stromabwärts der zweiten Ventilgruppe 32 ist ebenfalls ein Rückschlagventil 92 angeordnet, das sich in einer Druckmittelströmungsrichtung hin zur Steuerkammer 14 öffnet. Das Wechselventil 78 ist dabei mit seinem ersten Eingangsanschluss 80 an den Druckmittelströmungspfad zwischen der ersten Ventilgruppe 28 und dem Rückschlagventil 90 und mit seinem zweiten Eingangsanschluss 82 im Druckmittelströmungspfad zwischen der zweiten Ventilgruppe 32 und dem Rückschlagventil 92 angeschlossen. Der Abgriff des LS-Druckes soll nur im Zulauf vorgesehen sein, weshalb die Rückschlagventile 90 und 92 vorgesehen sind.

Des Weiteren sind gesetzlich für eine Lenkungsvorrichtung vorgeschriebene Druckbegrenzungsventile 94 und 96 und Nachsaugventile 98 und 100 bei der elektrohydraulischen Lenkungsvorrichtung 1 angeordnet. Das in der Figur 3 linke Druckbegrenzungsventil 94 öffnet hierbei ab einem bestimmten Druck in der Anschlussleitung 16 eine Druckmittelverbindung zwischen der Anschlussleitung 16 und dem Tank 38. Mit dem rechten Druckbegrenzungsventil 96 wird eine Druckmittelverbindung zwischen der Anschlussleitung 18 und dem Tank 38 bei einem bestimmten Druck in der Anschlussleitung 18 geöffnet. Das in der Figur 3 linke Nachsaugventil 98 ist als Rückschlagventil ausgebildet, das sich in einer Druckmittelströmungsrichtung hin zur Anschlussleitung 16 öffnet, wodurch Druckmittel vom Tank 38 nachgesaugt werden kann. Das rechte Nachsaugventil 100 ist als ein sich in Druckmittelströmungsrichtung hin zur Anschlussleitung 18 öffnendes Rückschlagventil ausgebildet, über das ebenfalls zum Tank 38 Druckmittel nachgesaugt werden kann.

Es ist denkbar, die Druckbegrenzungsventile 94 und 96 und die Nachsaugventile 98 und 100 entsprechend in der Lenkungsvorrichtung 1 gemäß Figur 1 vorzusehen, indem diese zwischen den Anschlussleitungen 16 und 18 in Figur 1 angeordnet sind. Des Weiteren kann der LS-Druck in der Lenkungsvorrichtung 1 aus Figur 1 entsprechend der Lenkungsvorrichtung aus Figur 3 abgegriffen werden. Hierzu werden einfach die Rückschlagventile 90 und 92 aus Figur 2 in die Lenkungsvorrichtung in Figur 1 im Druckmittelströmungspfad zwischen der Ventilgruppe 28 und 32 und der jeweiligen Anschlussleitung 16 beziehungsweise 18 eingesetzt. Die Eingangsanschluss 80 und 82 des Wechselventils 78 aus Figur 1 werden dann im Druckmittelströmungspfad zwischen der Ventilgruppe 28 und dem Rückschlagventil 90 beziehungsweise zwischen der Ventilgruppe 32 und dem Rückschlagventil 92 angeschlossen.

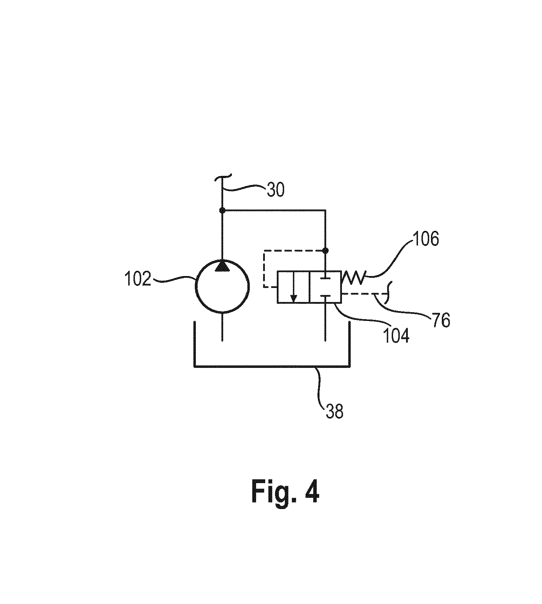

Gemäß der Figur 4 ist eine Hydropumpe 102 in Form einer Konstantpumpe dargestellt, die anstelle der Hydropumpe 44 aus Figur 1 einsetzbar ist. Anstatt dem Druckregler 75 aus Figur 1 ist dann ein proportional verstellbares 2/2-Wegeventil 104 vorgesehen, dessen Ventilschieber in Richtung seiner Schließstellung mit einer Federkraft einer Ventilfeder 106 beaufschlagt ist. In Öffnungsrichtung wird der Ventilschieber vom Druck in der Pumpenleitung 30 beaufschlagt. Des Weiteren wird der Ventilschieber in Richtung seiner Schließstellung vom LS-Druck über die LS-Leitung 76 beaufschlagt. Über das Wegeventil 104 ist dann eine Verbindung zwischen der Pumpenleitung 30 und dem Tank 38 steuerbar.

Die Ventile 48 bis 62 aus Figur 1 können alternativ als Proportionalventile ausgestaltet sein. Die Steuervorrichtung 68 würde die Ventile 48 bis 62 dann jeweils mit einem Stromsignal ansteuern, das in Abhängigkeit der Regeldifferenz ist. Eine Größe des Stromsignals ist dabei dann etwa proportional zum effektiven freien Strömungsquerschnitt der angesteuerten Ventile 48 bis 62.

Offenbart ist eine elektrohydraulische Anordnung, insbesondere eine elektrohydraulische Lenkungsvorrichtung, die ein Stellglied, insbesondere in Form eines Lenkzylinders, aufweist. Zur Verstellung des Stellglieds in eine erste Richtung ist ein erster Anschluss des Stellglieds über eine erste Zuleitung mit einer Druckmittelversorgung, insbesondere in der Form einer Hydropumpe, verbindbar. Zur Verstellung des Stellglieds in eine andere Richtung ist ein zweiter Anschluss des Stellglieds über eine zweite Zuleitung ebenfalls mit der Druckmittelversorgung verbindbar. Des Weiteren ist der erste Anschluss über eine erste Rückleitung und der zweite Anschluss über eine zweite Rückleitung mit einer Druckmittelsenke verbindbar. In einer jeweiligen Zuleitung und einer jeweiligen Rückleitung ist eine Ventilgruppe mit jeweils einer Mehrzahl fluidisch parallel angeordneter Ventile zum Steuern eines Druckmittelvolumenstroms angeordnet. Mit einem Sensor wird ein Stellungsistwert, insbesondere eine Verstellposition, des Stellglieds bestimmt und an eine Steuervorrichtung gemeldet. Diese bildet aus dem Stellungsistwert und einem vorgegebenen Stellungssollwert eine Regeldifferenz. Anhand der Regeldifferenz wird ein effektiver freier Strömungsquerschnitt der Ventile und somit das Stellglied gesteuert.

### Bezugszeichenliste:

| | |
|---|---|
| 1 | elektrohydraulische Lenkungsvorrichtung |
| 2 | Lenkzylinder |
| 4 | Ventilanordnung |
| 6 | Kolben |
| 8 | Kolbenstange |
| 10 | Kolbenstange |
| 12 | Steuerkammer |
| 14 | Steuerkammer |
| 16 | Anschlussleitung |
| 18 | Anschlussleitung |
| 20 | erste Zuleitung |
| 22 | erste Rückleitung |
| 24 | zweite Zuleitung |
| 26 | zweite Rückleitung |
| 28 | erste Ventilgruppe |
| 30 | Pumpenleitung |
| 32 | zweite Ventilgruppe |
| 34 | dritte Ventilgruppe |
| 36 | Tankleitung |
| 38 | Tank |
| 40 | vierte Ventilgruppe |
| 42 | Tankleitung |
| 44 | Hydropumpe |
| 46 | Tankleitung |
| 48 | Ventil |
| 50 | Ventil |
| 52 | Ventil |
| 54 | Ventil |
| 56 | Ventil |
| 58 | Ventil |
| 60 | Ventil |
| 62 | Ventil |
| 64 | Ventilfeder |
| 66 | elektrischer Aktuator |
| 68 | Steuervorrichtung |
| 70 | Steuerleitung |
| 72 | Signalleitung |
| 74 | Wegaufnehmer |
| 75 | Druckregler |
| 76 | LS-Leitung |
| 78 | Wechselventil |
| 80 | Eingangsanschluss |
| 82 | Eingangsanschluss |
| 84 | Druckmeldeleitung |
| 86 | Drucksensor |
| 88 | Signalleitung |
| 90 | Rückschlagventil |
| 92 | Rückschlagventil |
| 94 | Druckbegrenzungsventil |
| 96 | Druckbegrenzungsventil |
| 98 | Nachsaugventil |
| 100 | Nachsaugventil |
| 102 | Hydropumpe |
| 104 | Wegeventil |
| 106 | Ventilfeder |
| A1 | erster Anschluss |
| A2 | zweiter Anschluss |
| P | Pumpenanschluss |
| T | Tankanschluss |
| x_ist | Stellungsistwert |
| x_soll | Stellungssollwert |
| u | Stellgröße |
| K | Faktor |

## Patentansprüche

1. Elektrohydraulische Anordnung mit einer Druckmittelversorgung (44), von der über eine erste Zuleitung (20) ein erster Anschluss (A1) eines Stellglieds (2) und über eine zweite Zuleitung (24) ein zweiter Anschluss (A2) des Stellglieds (2) mit Druckmittel versorgbar sind, und wobei der erste Anschluss (A1) über eine erste Rückleitung (22) und der zweite Anschluss (A2) über eine zweite Rückleitung (26) mit einer Druckmittelsenke (38) verbindbar sind, wobei in einer jeweiligen Zuleitung (20, 24) und einer jeweiligen Rückleitung (22, 26) eine Ventilgruppe (28, 32, 34, 40) mit jeweils mehreren fluidisch parallel angeordnete Ventilen (48 bis 62) zum Steuern eines Druckmittelvolumenstroms angeordnet sind, **dadurch gekennzeichnet, dass** ein Sensor (74) zum Messen eines Stellungsistwerts (x_ist) des Stellglieds (2) vorgesehen ist, wobei eine Steuervorrichtung (68) einen effektiven freien Strömungsquerschnitt der Ventile (48 bis 62) in Abhängigkeit einer Regeldifferenz zwischen dem Stellungsistwert (x_ist) und einem vorgegebenen Stellungssollwert (x_soll) steuert.

2. Anordnung nach Anspruch 1, wobei eine Größe des effektiven freien Strömungsquerschnitts der Ventile (48 bis 62) einer jeweiligen Ventilgruppe (28, 32, 34, 40) in Abhängigkeit von einer Größe der Regeldifferenz ist.

3. Anordnung nach Anspruch 1 oder 2, wobei die Ventile (48 bis 62) einer Ventilgruppe (28, 32, 34, 40) hinsichtlich ihres effektiven freien Strömungsquerschnitts gleich oder in einem festen Verhältnis zueinander angesteuert sind.

4. Anordnung nach einem der Ansprüche 1 bis 3, wobei das Stellglied (2) ein Lenkzylinder (2) ist, der einen zwei Steuerkammern (12, 14) voneinander trennenden Kolben (6) aufweist, wobei die Steuerkammern (12, 14) mit einem jeweiligen Anschluss (A1, A2) verbunden sind.

5. Anordnung nach einem der vorhergehenden Ansprüche, wobei sich ein effektiver freier Strömungsquerschnitt der Ventile (48, 50) in der ersten Zuleitung (20) zu den Ventilen (60, 62) der Ventilgruppe (40) in der zweiten Rückleitung (26) und/oder der Ventile (52, 54) der Ventilgruppe (32) in der zweiten Zuleitung (24) zu den Ventilen (56, 58) der Ventilgruppe (34) in der ersten Rückleitung (22) unterscheidet.

6. Anordnung nach einem der vorhergehenden Ansprüche, wobei der effektive freie Strömungsquerschnitt der Ventile (48, 50) in der ersten Zuleitung (20) größer als der effektive freie Strömungsquerschnitt der Ventile (60, 62) in der zweiten Rückleitung (26) und/oder der effektive freie Strömungsquerschnitt der Ventile (52, 54) in der zweiten Zuleitung (24) größer als der effektive freie Strömungsquerschnitt der Ventile (56, 58) in der ersten Rückleitung (22) ist.

7. Anordnung nach einem der vorhergehenden Ansprüche, wobei der größte effektive freie Strömungsquerschnitt jedes Ventils (56, 58) der Ventilgruppe (34) in der ersten Rückleitung (22) um einen festen Faktor (K) kleiner ist als der größte effektive freie Strömungsquerschnitt jedes Ventils (52, 54) der Ventilgruppe (32) in der zweiten Zuleitung (24) und/oder der größte effektive freie Strömungsquerschnitt jedes Ventils (60, 62) der Ventilgruppe (40) in der zweiten Rückleitung (26) um einen festen Faktor (K) kleiner ist als der größte effektive freie Strömungsquerschnitt jedes Ventils (48, 50) der Ventilgruppe (28) in der ersten Zuleitung (20).

8. Anordnung nach Anspruch 6 oder 7, wobei der Faktor konstruktiv oder durch unterschiedliche Ansteuerung der Ventile durch die Steuervorrichtung geschaffen ist.

9. Anordnung nach einem der vorhergehenden Ansprüche, wobei die Ventile (48 bis 62) zumindest einer Ventilgruppe (28, 32, 34, 40) als Proportionalventile oder als Schaltventile ausgebildet sind.

10. Anordnung nach Anspruch 9, wobei die Steuervorrichtung (68) die als Proportionalventil ausgeführten Ventile (48 bis 62) jeweils mit einem Stromsignal ansteuert, das in Abhängigkeit der Regeldifferenz ist, und wobei die Größe des Stromsignals etwa proportional zum effektiven freien Strömungsquerschnitt der angesteuerten Ventile (48 bis 62) ist.

11. Anordnung nach Anspruch 9, wobei die Steuervorrichtung (68) die als Schaltventile ausgebildeten Ventile (48 bis 62) jeweils mit einem pulsbreitenmodulierten Stromsignal ansteuert.

12. Anordnung nach einem der vorhergehenden Ansprüche, wobei die Ventile (48 bis 62) als Sitzventile ausgebildet sind.

13. Anordnung nach einem der vorhergehenden Ansprüche, wobei die Ventile (48, 50) der Ventilgruppe (28) in der ersten Zuleitung (20) und die Ventile (60, 62) der Ventilgruppe (40) in der zweiten Rückleitung (26) und/oder die Ventile (52, 54) der Ventilgruppe (32) in der zweiten Zuleitung (24) und die Ventile (56, 58) der Ventilgruppe (34) in der ersten Rückleitung (22) identisch ausgebildet und in einer gleichen Anzahl vorgesehen sind.

14. Verfahren zur Steuerung einer elektrohydraulischen Anordnung (1) gemäß einem der vorhergehenden Ansprüche, wobei der effektive freie Strömungsquerschnitt der Ventile (48 bis 62) einer jeweiligen Ventilgruppe (28, 32, 34, 40) von der Steuervorrichtung (68) in Abhängigkeit der Regeldifferenz zwischen dem Stellungsistwert (x_ist) und dem vorgegebenen Stellungssollwert (x_soll) gesteuert wird.

15. Mobile Arbeitsmaschine mit wenigstens einem lenkbaren Rad, wobei die Arbeitsmaschine eine elektrohydraulische Anordnung (1) gemäß einem der Ansprüche 1 bis 13 aufweist, wobei das Stellglied (2) zum Lenken des wenigstens einen Rads mit diesem gekoppelt ist.
